# EUROPEAN PATENT APPLICATION

(11) **EP 4 506 083 A1**
(43) Date of publication of application: **12.02.2025**
(21) Application number: 24177725.9
(22) Date of filing: 23.05.2024
(51) Int. Cl.: B22D 21/00, B22D 21/04, C22C 1/02, C22C 1/03, C22C 1/06, C22C 21/02, C22C 21/04

(54) **HEAT-TREATMENT-FREE DIE-CAST ALUMINUM ALLOY AND PREPARATION METHOD AND APPLICATION THEREOF**

(30) Priority: 08.08.2023 CN 202310996342
(71) Applicant: Xiaomi EV Technology Co., Ltd., 100176 Beijing (CN)
(72) Inventor: ZHANG, Xingmeng, Beijing, 100176 (CN); CHEN, Xiaodu, Beijing, 100176 (CN); CHENG, Tianjie, Beijing, 100176 (CN); GONG, Junchuan, Beijing, 100176 (CN); WU, Xinxing, Beijing, 10076 (CN)
(74) Representative: Stöckeler, Ferdinand

(57) **Abstract**

A heat-treatment-free die-cast aluminum alloy includes: 10.0 to 12.0 wt% of Si, 0.9 to 1.5 wt% of Mg, 2.5 to 3.5 wt% of Cu, 0.4 to 0.8 wt% of Mn, 0.9 to 1.5 wt% of Zn, 0.1 to 0.2 wt% of Ti, 0.03 to 0.06 wt% of Sr, 0.18 wt% or less of Fe, 0.15 wt% or less of a rare earth element including at least one of Sm or Y, 0.1 wt% or less of an impurity element, and a balance of Al, based on a total weight of the die-cast aluminum alloy.

## Description

### TECHNICAL FIELD

The present invention relates to the technical field of die-cast aluminum alloys, and more particularly to a heat-treatment-free die-cast aluminum alloy and a preparation method and application thereof.

### BACKGROUND

Aluminum alloy is widely used in die-casting housings of motors due to its low density, good thermal conductivity and flow property. A most widely used die-cast aluminum alloy material in the current industrial application is an Al-Si-Cu alloy, which has an excellent casting property and good mechanical properties. For a high-power motor, a balance plate bears a larger tensile stress, and the stress in a certain location even exceeds 300 MPa. At the same time, an elongation of ≥ 1% is required. If a conventional material is used, the wall thickness will inevitably need to be increased, otherwise it cannot meet the high strength requirement of castings, such as a motor balance plate and an end cover of a rotary transformer of a new energy automobile. High-performance aluminum alloy materials such as AlSi10MnMg and AlMg5Si2 may obtain excellent mechanical properties by controlling alloy element contents and subjecting to the heat treatment process. However, the preparation of these alloys requires high-purity new materials, and the cost is high. For a large and complex die-casting member, if it is subjected to a heat treatment, a quenching process will cause local deformation in areas with uneven wall thickness, so a finishing process is required, which is both time-consuming and labor-intensive. At present, the die-cast aluminum alloy materials in the related art all have shortcomings such as low strength and poor lightweight effect.

### SUMMARY

The purpose of the present invention is to provide a heat-treatment-free die-cast aluminum alloy and a preparation method and application thereof, so as to improve a strength of the die-cast aluminum alloy.

The present invention is defined by the appended claims. Preferred embodiments are included as dependent claims.

In order to achieve the above purpose, a first aspect of the present invention provides a heat-treatment-free die-cast aluminum alloy. The die-cast aluminum alloy includes: 10.0 to 12.0 wt% of Si, 0.9 to 1.5 wt% of Mg, 2.5 to 3.5 wt% of Cu, 0.4 to 0.8 wt% of Mn, 0.9 to 1.5 wt% of Zn, 0.1 to 0.2 wt% of Ti, 0.03 to 0.06 wt% of Sr, 0.18 wt% or less of Fe, 0.15 wt% or less of a rare earth element, 0.1 wt% or less of an impurity element, and a balance of Al, based on a total weight of the die-cast aluminum alloy. The rare earth element includes at least one of Sm or Y.

Optionally, the die-cast aluminum alloy includes: 10.0 to 12.0 wt% of Si, 1.0 to 1.4 wt% of Mg, 3.0 to 3.3 wt% of Cu, 0.03 to 0.06 wt% of Y, 0.03 to 0.06 wt% of Sm, 0.4 to 0.55 wt% of Mn, 0.9 to 1.5 wt% of Zn, 0.1 to 0.2 wt% of Ti, 0.03 to 0.06 wt% of Sr, 0.12 to 0.16 wt% of Fe, 0.05 wt% or less of the impurity element, and a balance of Al, based on the total weight of the die-cast aluminum alloy.

Optionally, a weight ratio of Sm to Y is in a range of 0.8 to 1.2, and a weight ratio of Mg to Cu is in a range of 0.32 to 0.45.

Optionally, the die-cast aluminum alloy has a yield strength of 240 to 280 MPa, an ultimate tensile strength of 330 to 380 MPa, and an elongation of 1 to 4%.

A second aspect of the present invention provides a method for preparing the heat-treatment-free die-cast aluminum alloy according to the first aspect of the present invention. The method includes: melting an aluminum ingot in a smelting furnace, and adding an industrial silicon, a Zn material, a Cu material and a Mn material for a first smelting to obtain a first melt; subjecting the first melt to a refining treatment and a slagging-off treatment to obtain a second melt; adding a Ti material, a Sr material, a rare earth material including at least one of a Sm material or an Y material, and a Mg material to the second melt for a second smelting to obtain a third melt; degassing the third melt to obtain a fourth melt; and high-pressure die casting the fourth melt to obtain the heat-treatment-free die-cast aluminum alloy.

Optionally, the Zn material is an Al-Zn alloy; the Cu material is an Al-Cu alloy; the Mn material is an Al-Mn alloy; the Ti material is an Al-Ti alloy; the Sr material is an Al-Sr alloy; the Sm material is an Al-Sm alloy; the Mg material is a magnesium ingot and/or a Mg-Y alloy, and the Y material is a Mg-Y alloy.

Optionally, the Al-Zn alloy is an Al-10Zn intermediate alloy; the Al-Cu alloy is an Al-50Cu intermediate alloy; the Al-Mn alloy is an Al-20Mn intermediate alloy; the Al-Ti alloy is an Al-5Ti intermediate alloy; the Al-Sr alloy is an Al-5Sr intermediate alloy; the Al-Sm alloy is an Al-20Sm intermediate alloy; and the Mg-Y alloy is a Mg-30Y intermediate alloy.

Optionally, the first smelting is performed at a temperature of 770 to 790 °C; and the second smelting is performed at a temperature of 750 to 760 °C.

Optionally, the refining treatment includes: introducing an inert gas atmosphere or nitrogen with refining agent powders into the first melt to perform a first refining at a temperature of 750 to 760 °C for 50 to 60 min; and reintroducing the inert gas atmosphere or nitrogen with the refining agent powders into the first melt to perform a second refining at a temperature of 750 to 760 °C. The inert gas is argon. The degassing is performed at a temperature of 750 to 760 °C for 10 to 15 min.

Optionally, conditions for the high-pressure die casting include: a die-casting temperature of 690 to 700 °C, a pressure of 35 to 40 MPa, a high-speed position of 220 to 230 mm, a press-shoot time of 6 to 8 s, and a cooling time of 8 to 10 s. A casting die for the high-pressure die casting has a thickness of 3 to 7 mm.

A third aspect of the present invention provides an automobile body structural member, which includes a die-cast aluminum alloy. The die-cast aluminum alloy is the heat-treatment-free die-cast aluminum alloy according to the first aspect of the present invention.

With the above technical solution, the ultimate tensile strength and the yield strength of the heat-treatment-free die-cast aluminum alloy according to embodiments of the present invention are significantly improved compared with existing alloys for automobile structural members, and the heat-treatment-free die-cast aluminum alloy according to embodiments of the present invention is suitable for producing a high-strength and lightweight motor structural member of a new energy electric automobile.

Other features and advantages of the present invention will be described in detail in the following detailed description.

### BRIEF DESCRIPTION OF THE DRAWINGS

The accompanying drawings are provided for a further understanding of the present invention and constitute a part of the specification. They are used to explain the present invention together with the following specific embodiments, but do not constitute a limitation on the present invention.
FIG. 1 shows a schematic process flow chart of a method for preparing a heat-treatment-free die-cast aluminum alloy according to embodiments of the present invention;
FIG. 2 shows stress-strain curves of aluminum alloy castings of Examples 1 to 2 and Comparative Examples 1 to 2 of the present invention;
FIG. 3 shows an exploded view of a motor balance plate made of a heat-treatment-free die-cast aluminum alloy of the present invention; and
FIG. 4 shows an example of a plate die in embodiments of the present invention.

### Reference Numerals:

1 - rotor shaft, 2 - first balance plate, 3 - rotor, and 4 - second balance plate.

### DETAILED DESCRIPTION

Some embodiments of the present invention will be described in detail below with reference to the accompanying drawings. It should be understood that the specific embodiments described here are only used to illustrate and explain the present invention, and are not intended to limit the present invention.

A first aspect of the present invention provides a heat-treatment-free die-cast aluminum alloy. The die-cast aluminum alloy includes: 10.0 to 12.0 wt% of Si (silicon), 0.9 to 1.5 wt% of Mg (magnesium), 2.5 to 3.5 wt% of Cu (copper), 0.4 to 0.8 wt% of Mn (manganese), 0.9 to 1.5 wt% of Zn (zinc), 0.1 to 0.2 wt% of Ti (titanium), 0.03 to 0.06 wt% of Sr (strontium), 0.18 wt% or less of Fe (iron), 0.15 wt% or less of a rare earth element, 0.1 wt% or less of an impurity element, and a balance of Al (aluminum), based on a total weight of the die-cast aluminum alloy. The rare earth element includes at least one of Sm (samarium) or Y (yttrium).

According to embodiments of the present invention, an aluminum alloy with a high strength is obtained by controlling contents of individual elements, especially Si, Mg, and Cu in the alloy and by adding the rare earth element including at least one of Y or Sm. The aluminum alloy has good mechanical properties without a heat treatment, and its ultimate tensile strength and yield strength are significantly improved compared with existing alloys for automotive e-motor structural members.

In the heat-treatment-free die-cast aluminum alloy of the present invention, the addition of the Si element improves a casting flow performance and a corrosion resistant property of the alloy, and plays a solid solution strengthening effect. When the Si content is 10.0 to 12.0 wt%, a hypoeutectic alloy may be formed. The Mg element acts as an important aging strengthening element in a Si-containing aluminum alloy, and may form new heterogeneous crystal nuclei with Si to form a Mg₂Si phase, which is conducive to crystallization refinement and has a great effect on improving the yield strength. The Cu element may form θ(CuAl₂) with Al, and is an important strengthening element in the aluminum alloy. The addition of the Fe element may alleviate a die sticking phenomenon of the die-cast aluminum alloy, and the Fe content of 0.18 wt% or less is beneficial to reducing the generation of needle-like β-Al₅FeSi phase and avoiding hindering the metal flow. The added Mn element may interact with a hardened iron-containing phase to reduce a hazard of the Fe phase. At the same time, the Mn element improves a heat resistance and compactness of the aluminum alloy, and improves a demoulding performance of the aluminum alloy. The addition of the Zn element is beneficial to the solid solution strengthening effect and improves the flow performance. The addition of the Ti element is conducive to increasing the nucleation of primary (Al) grains and achieving a grain refinement. However, if the Ti content is too high, nucleation particles will be coarsened, the refinement effect will be weakened, and the performance will decrease. The addition of the Sr element may transform the eutectic Si from a lamellar to a fine granular, thereby improving the plasticity of the aluminum alloy. The rare earth element may form a stable intermetallic compound with Al, which is beneficial to refining the crystal structure, so as to play a metamorphic effect and reduce a hydrogen content in the melt, thereby playing a role in refining, purifying and alloying. In particular, through a synergistic effect of Sm and Y elements, the microstructure of the alloy may be significantly refined, not only transforming the primary α-Al from dendritic crystals into small cellular crystals and equiaxed crystals, but also transforming the massive eutectic silicon into a fine fibrous or granular structure.

In an illustrative embodiment of the present invention, the die-cast aluminum alloy includes: 10.0 to 12.0 wt% of Si, 1.0 to 1.4 wt% of Mg, 3.0 to 3.3 wt% of Cu, 0.03 to 0.06 wt% of Y, 0.03 to 0.06 wt% of Sm, 0.4 to 0.55 wt% of Mn, 0.9 to 1.5 wt% of Zn, 0.1 to 0.2 wt% of Ti, 0.03 to 0.06 wt% of Sr, 0.12 to 0.16 wt% of Fe, 0.05 wt% or less of the impurity element, and a balance of Al, based on the total weight of the die-cast aluminum alloy. The above recipe is conducive to further improving the strength of the die-cast aluminum alloy.

In a preferred embodiment, a weight ratio of Sm to Y is in a range of 0.8 to 1.2, and a weight ratio of Mg to Cu is in a range of 0.32 to 0.45. The above ratios are conducive to further improving the strength of the die-cast aluminum alloy.

According to the present invention, the die-cast aluminum alloy has a yield strength of 240 to 280 MPa, an ultimate tensile strength of 330 to 380 MPa, and an elongation of 1 to 4%, such as 1.1 to 2.5%. The heat-treatment-free die-cast aluminum alloy of the present invention meets performance requirements of the automotive industry for a structural member and is suitable for producing a high-strength and lightweight motor structural member of a new energy electric automobile.

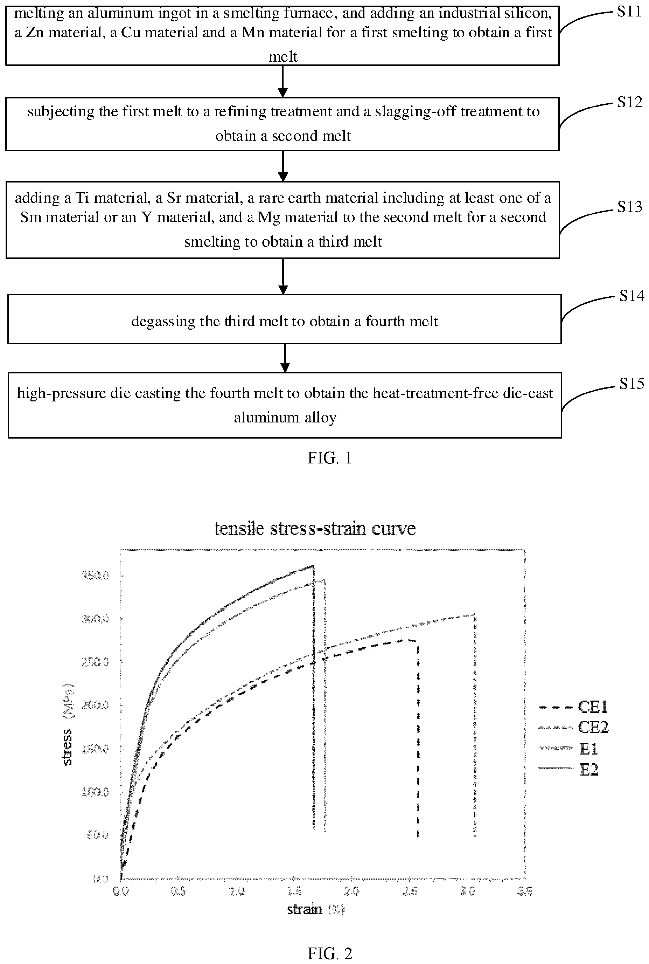

A second aspect of the present invention provides a method for preparing a heat-treatment-free die-cast aluminum alloy. Referring to FIG. 1, the method includes:
melting an aluminum ingot in a smelting furnace, and adding an industrial silicon, a Zn material, a Cu material and a Mn material for a first smelting to obtain a first melt;
subj ecting the first melt to a refining treatment and a slagging-off treatment to obtain a second melt;
adding a Ti material, a Sr material, a rare earth material including at least one of a Sm material or an Y material, and a Mg material to the second melt for a second smelting to obtain a third melt;
degassing the third melt to obtain a fourth melt; and
high-pressure die casting the fourth melt to obtain the heat-treatment-free die-cast aluminum alloy.

The method of the present invention may prepare the heat-treatment-free die-cast aluminum alloy with excellent performances without performing a heat treatment. The method of the present invention not only solves problems of deformation and bubbles in the casting caused by the heat treatment, but also simplifies the integrated die-casting process and improves the yield rate.

According to the present invention, the Zn material may be an Al-Zn alloy; the Cu material may be an Al-Cu alloy; the Mn material may be an Al-Mn alloy; the Ti material may be an Al-Ti alloy; the Sr material may be an Al-Sr alloy; the Sm material may be an Al-Sm alloy; the Mg material may be a magnesium ingot and/or a Mg-Y alloy, and the Y material may be an Al-Y alloy and/or a Mg-Y alloy.

In an illustrative embodiment of the present invention, the Al-Zn alloy is an Al-10Zn intermediate alloy; the Al-Cu alloy is an Al-50Cu intermediate alloy; the Al-Mn alloy is an Al-20Mn intermediate alloy; the Al-Ti alloy is an Al-5Ti intermediate alloy; the Al-Sr alloy is an Al-5Sr intermediate alloy; the Al-Sm alloy is an Al-20Sm intermediate alloy; and the Mg-Y alloy is a Mg-30Y intermediate alloy.

According to the present invention, the first smelting may be performed at a temperature of 770 to 790 °C; and the second smelting may be performed at a temperature of 750 to 760 °C.

According to the present invention, the refining treatment may include: introducing an inert gas atmosphere or nitrogen with refining agent powders into the first melt to perform a first refining at a temperature of 750 to 760 °C for 50 to 60 min; and reintroducing the inert gas atmosphere or nitrogen with the refining agent powders into the first melt to perform a second refining at a temperature of 750 to 760 °C. The inert gas is argon. The refining agent may be a special refining agent for aluminum alloys common in the related art, and the type and amount of the refining agent are not particularly limited in the present invention. The slagging-off treatment may be a method commonly used in the related art. For example, a specific operation of the slagging-off treatment may be a manual slagging-off using an iron slagging-off tool. The second melt is obtained by standing still after the slagging-off treatment.

According to the present invention, the degassing is performed by using the inert gas (argon) atmosphere or nitrogen at a temperature of 750 to 760 °C for 10 to 15 min. The fourth melt is obtained by standing still for 20 to 30 min after the degassing.

According to the present invention, conditions for the high-pressure die casting may include: a die-casting temperature of 690 to 700 °C, a pressure of 35 to 40 MPa, a high-speed position of 220 to 230 mm, a press-shoot time of 6 to 8 s, and a cooling time of 8 to 10 s. A casting die for the high-pressure die casting has a thickness of 3 to 7 mm.

A third aspect of the present invention provides an automobile body structural member, which includes a die-cast aluminum alloy. The die-cast aluminum alloy is the aforementioned heat-treatment-free die-cast aluminum alloy or the heat-treatment-free die-cast aluminum alloy prepared by the aforementioned method.

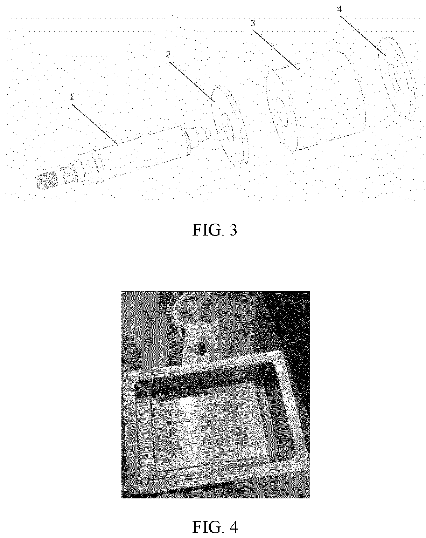

Further, the automobile body structural member is a motor structural member of a new energy electric automobile, and specifically may be a balance plate and/or an end cover of a rotary transformer. Referring to FIG. 3, a first balance plate 2, a rotor 3 and a second balance plate 4 are sequentially assembled to a rotor shaft 1. Both the first balance plate 2 and the second balance plate 4 may include the heat-treatment-free die-cast aluminum alloy of the present invention. Using the heat-treatment-free die-cast aluminum alloy of the present invention to manufacture the high-strength motor balance plate and the high-strength end cover of the rotary transformer of the new energy automobile may meet the development needs of the new energy electric automobile for lightweight, high power and high torque. Specifically, the high strength of the die-cast aluminum alloy of the present invention allows the local thinning, bringing the benefit of weight reduction. Further, with the increase of the torque, the stress borne by the balance plate and the end cover of the rotary transformer also increases. The heat-treatment-free die-cast aluminum alloy of the present invention can meet the strength performance required at the high power and high torque. In addition, the die-cast aluminum alloy of the present invention may meet a high strength requirement without a heat treatment, which is beneficial to improving the production efficiency, reducing the production cost, and reducing carbon emission.

The present invention will be further described in detail below through examples. The materials used in the examples are all commercially available.

The method for preparing an aluminum alloy involved in examples and comparative examples specifically include the following steps.

### 1) Ingredients

An aluminum ingot, an industrial silicon, a magnesium ingot, an Al-10Zn intermediate alloy, an Al-50Cu intermediate alloy, an Al-20Mn intermediate alloy, an Al-5Ti intermediate alloy, an Al-5Sr intermediate alloy, an Al-20Sm intermediate alloy, and a Mg-30Y intermediate alloy were prepared according to a respective recipe shown in Table 1.

### 2) Alloy smelting

The aluminum ingot was smelted in a smelting furnace at a smelting temperature of 680 to 690 °C, the temperature was raised to and kept at 770 to 790 °C after the aluminum ingot is completely melted, then the industrial silicon, the Al-10Zn intermediate alloy, the Al-50Cu intermediate alloy, and the Al-20Mn intermediate alloy were added for a first smelting to obtain a first melt.

### 3) Refining treatment and slagging-off treatment

The temperature was kept at 750 to 760 °C, an aluminum alloy special refining agent was added for a first refining under powder spraying. A high-purity nitrogen with refining agent powders was introduced into the first melt by using a rotary spraying and blowing equipment to perform a second refining, where a pressure of the high-purity N₂ was 0.5 ± 0.1 MPa, and a flow rate was 2.0 ± 0.1 m³/h. The slagging-off treatment was performed after the refining, followed by standing still to obtain a second melt.

### 4) Alloy addition

The magnesium ingot, the Al-5Ti intermediate alloy, the Al-5Sr intermediate alloy, the Al-20Sm intermediate alloy, and the Mg-30Y intermediate alloy were added to the second melt for the second smelting at a temperature of 750 to 760 °C, obtaining a third melt.

The melt was sampled and analyzed to ensure that its composition is qualified.

### 5) Degassing

The smelting temperature was kept at 750 to 760 °C, and high-purity nitrogen was used to perform degassing in the furnace for a degassing time of about 15 min, followed by standing still for 20 to 30 min to obtain a fourth melt.

The melt was sampled and analyzed to ensure that its composition is qualified.

### 6) High-pressure die-casting

The fourth melt was subjected to a high-pressure die casting at an aluminum melt temperature of 690 to 700 °C using a LK DCC500 die-casting machine. The casting die was a plate die with a thickness of a 3 mm for a reactive e-motor balance plate (refer to FIG. 4). The following conditions were used: a die-casting pressure of 40 MPa, a high-speed position of 230 mm, a press-shoot time of 8 s, and a cooling time of 8 s. As a result, a heat-treatment-free die-cast aluminum alloy was obtained.

### Example 1

The heat-treatment-free die-cast aluminum alloy prepared in this example includes: 10.45 wt% of Si, 0.13 wt% of Fe, 3.03 wt% of Cu, 0.50 wt% of Mn, 1.00 wt% of Mg, 1.01 wt% of Zn, 0.16 wt% of Ti, 0.048 wt% of Sr, 0.049 wt% of Y, 0.053 wt% of Sm, 0.05 wt% or less of an impurity element and a balance of Al. The weight ratio of Sm to Y is 1.1, and the weight ratio of Mg to Cu is 0.33.

### Example 2

The heat-treatment-free die-cast aluminum alloy prepared in this example includes: 10.26 wt% of Si, 0.15 wt% of Fe, 3.25 wt% of Cu, 0.50 wt% of Mn, 1.09 wt% of Mg, 1.05 wt% of Zn, 0.14 wt% of Ti, 0.044 wt% of Sr, 0.054 wt% of Y, 0.049 wt% of Sm, 0.05 wt% or less of an impurity element and a balance of Al. The weight ratio of Sm to Y is 0.9, and the weight ratio of Mg to Cu is 0.34.

### Example 3

The heat-treatment-free die-cast aluminum alloy prepared in this example includes: 10.30 wt% of Si, 0.16 wt% of Fe, 3.22 wt% of Cu, 0.51 wt% of Mn, 1.39 wt% of Mg, 1.05 wt% of Zn, 0.15 wt% of Ti, 0.042 wt% of Sr, 0.052 wt% of Y, 0.049 wt% of Sm, 0.05 wt% or less of an impurity element and a balance of Al. The weight ratio of Sm to Y is 0.9, and the weight ratio of Mg to Cu is 0.43.

### Example 4

The heat-treatment-free die-cast aluminum alloy prepared in this example includes: 10.28 wt% of Si, 0.16 wt% of Fe, 3.01 wt% of Cu, 0.49 wt% of Mn, 1.39 wt% of Mg, 1.02 wt% of Zn, 0.16 wt% of Ti, 0.042 wt% of Sr, 0.037 wt% of Y, 0.051 wt% of Sm, 0.05 wt% or less of an impurity element and a balance of Al. The weight ratio of Sm to Y is 1.4, and the weight ratio of Mg to Cu is 0.46.

### Example 5

The heat-treatment-free die-cast aluminum alloy prepared in this example includes: 10.09 wt% of Si, 0.12 wt% of Fe, 3.30 wt% of Cu, 0.55 wt% of Mn, 1.01 wt% of Mg, 1.06 wt% of Zn, 0.12 wt% of Ti, 0.045 wt% of Sr, 0.046 wt% of Y, 0.031 wt% of Sm, 0.05 wt% or less of an impurity element and a balance of Al. The weight ratio of Sm to Y is 0.7, and the weight ratio of Mg to Cu is 0.31.

### Example 6

The heat-treatment-free die-cast aluminum alloy prepared in this example includes: 10.04 wt% of Si, 0.10 wt% of Fe, 2.66 wt% of Cu, 0.67 wt% of Mn, 1.46 wt% of Mg, 1.07 wt% of Zn, 0.12 wt% of Ti, 0.044 wt% of Sr, 0.014 wt% of Y, 0.027 wt% of Sm, 0.05 wt% or less of an impurity element and a balance of Al. The weight ratio of Sm to Y is 1.92, and the weight ratio of Mg to Cu is 0.55.

### Example 7

The heat-treatment-free die-cast aluminum alloy prepared in this example includes: 10.30 wt% of Si, 0.17 wt% of Fe, 2.52 wt% of Cu, 0.56 wt% of Mn, 0.97 wt% of Mg, 1.24 wt% of Zn, 0.13 wt% of Ti, 0.051 wt% of Sr, 0.062 wt% of Y, 0.081 wt% of Sm, 0.05 wt% or less of an impurity element and a balance of Al. The weight ratio of Sm to Y is 1.31, and the weight ratio of Mg to Cu is 0.38.

### Comparative Example 1

The die-cast aluminum alloy in this comparative example is commonly used ADC12, which includes: 10.31 wt% of Si, 0.80 wt% of Fe, 2.30 wt% of Cu, 0.26 wt% of Mn, 0.18 wt% of Mg, 0.84 wt% of Zn, 0.03 wt% of Ti, 0.02 wt% of Sr, 0.05 wt% or less of an impurity element and a balance of Al.

### Comparative Example 2

The die-cast aluminum alloy in this comparative example is commonly used A380, which includes: 8.51 wt% of Si, 1.03 wt% of Fe, 3.06 wt% of Cu, 0.17 wt% of Mn, 0.03 wt% of Mg, 0.21 wt% of Zn, 0.07 wt% of Ti, 0.05 wt% or less of an impurity element and a balance of Al.

### Comparative Example 3

The heat-treatment-free die-cast aluminum alloy prepared in this comparative example includes: 10.49 wt% of Si, 0.13 wt% of Fe, 3.08 wt% of Cu, 0.51 wt% of Mn, 1.08 wt% of Mg, 1.07 wt% of Zn, 0.14 wt% of Ti, 0.05 wt% of Sr, 0.051 of wt% Sm, 0.05 wt% or less of an impurity element and a balance of Al.

### Comparative Example 4

The heat-treatment-free die-cast aluminum alloy prepared in this comparative example includes: 10.45 wt% of Si, 0.13 wt% of Fe, 3.06 wt% of Cu, 0.53 wt% of Mn, 1.06 wt% of Mg, 1.01 wt% of Zn, 0.16 wt% of Ti, 0.048 wt% of Sr, 0.052 wt% of Y, 0.05 wt% or less of an impurity element and a balance of Al.

### Comparative Example 5

The heat-treatment-free die-cast aluminum alloy prepared in this comparative example includes: 9.50 wt% of Si, 0.12 wt% of Fe, 2.49 wt% of Cu, 0.50 wt% of Mn, 1.00 wt% of Mg, 1.60 wt% of Zn, 0.15 wt% of Ti, 0.035 wt% of Sr, 0.083 wt% of Sm, 0.05 wt% or less of an impurity element and a balance of Al.

### Comparative Example 6

The heat-treatment-free die-cast aluminum alloy in this comparative example was prepared with reference to Example 6 in CN105463269A, and includes: 15 wt% of Si, 1 wt% of Fe, 0.5 wt% of Cu, 1 wt% of Mn, 0.6 wt% of Mg, 1 wt% of Zn, 0.1 wt% of Sr, 0.15 wt% of Gd, 0.15 wt% of La, 0.13 wt% of Y, 0.12 wt% of Nd, 0.2 wt% of Sm, 0.1 wt% of Er, 0.2 wt% of Yb, a balance of Al, and an unavoidable impurity.

### Comparative Example 7

The heat-treatment-free die-cast aluminum alloy prepared in this comparative example includes: 10.45 wt% of Si, 0.13 wt% of Fe, 3 wt% of Cu, 0.50 wt% of Mn, 0.5 wt% of Mg, 0.16 wt% of Ti, a total amount of a rare earth mixture of La, Ce, Sm and Nd of not more than 1 wt%, of which each element of La, Ce, Sm and Nd is less than 0.35 wt%, 0.01 wt% or less of an impurity element and a balance of Al.

### Comparative Example 8

The heat-treatment-free die-cast aluminum alloy prepared in this comparative example includes: 8.5 wt% of Si, 0.14 wt% of Fe, 2.0 wt% of Cu, 0.54 wt% of Mn, 1.5 wt% of Mg, 0.72 wt% of Zn, 0.08 wt% of Ti, 0.14 wt% of Zr, 0.03 wt% of Sr, 0.01 wt% or less of an impurity element and a balance of Al.

Table 1 shows compositions (in wt%) of the die-cast aluminum alloys prepared in the Examples 1 to 7 (E1- E7 for short) and Comparative Examples 1 to 5 (CE1- CE5 for short).

**Table 1**

| | Si | Fe | Cu | Mn | Mg | Zn | Ti | Sr | Y | Sm |
|---|---|---|---|---|---|---|---|---|---|---|
| E1 | 10.45 | 0.13 | 3.03 | 050 | 1.00 | 1.01 | 0.16 | 0.048 | 0.049 | 0.053 |
| E2 | 10.26 | 0.15 | 3.25 | 0.50 | 1.09 | 1.05 | 0.14 | 0.044 | 0.054 | 0.049 |
| E3 | 10.30 | 0.16 | 3.22 | 0.51 | 1.39 | 1.05 | 0.15 | 0.042 | 0.052 | 0.049 |
| E4 | 10.28 | 0.16 | 3.01 | 0.49 | 1.39 | 1.02 | 0.16 | 0.042 | 0.037 | 0.051 |
| E5 | 10.09 | 0.12 | 3.30 | 0.55 | 1.01 | 1.06 | 0.12 | 0.045 | 0.046 | 0.031 |
| E6 | 10.04 | 0.10 | 2.66 | 0.67 | 1.46 | 1.07 | 0.12 | 0.044 | 0.014 | 0.027 |
| E7 | 10.30 | 0.17 | 2.52 | 0.56 | 0.97 | 1.24 | 0.13 | 0.051 | 0.062 | 0.081 |
| CE1 | 10.31 | 0.80 | 2.30 | 0.26 | 0.18 | 0.84 | 0.03 | 0.02 | / | / |
| CE2 | 8.51 | 1.03 | 3.06 | 0.17 | 0.03 | 0.21 | 0.07 | / | / | / |
| CE3 | 10.49 | 0.13 | 3.08 | 0.51 | 1.08 | 1.07 | 0.14 | 0.05 | / | 0.051 |
| CE4 | 10.45 | 0.13 | 3.06 | 0.53 | 1.06 | 1.01 | 0.16 | 0.048 | 0.052 | / |
| CE5 | 9.50 | 0.12 | 2.49 | 0.50 | 1.00 | 1.6 | 0.15 | 0.035 | / | 0.083 |

### Test Example 1

The mechanical properties of the aluminum alloy castings prepared in above examples and comparative examples were tested by a method in accordance with GB/T228.1. The strain was controlled at 0.00025/s before yielding, and the displacement strain was controlled at 0.001/s after yielding. The test results are shown in Table 2.

**Table 2**

| | yield strength , MPa | ultimate tensile strength , MPa | elongation , % |
|---|---|---|---|
| E1 | 265.7 | 345.9 | 1.8 |
| E2 | 268.8 | 361,8 | 1.7 |
| E3 | 265.4 | 357.3 | 1.5 |
| E4 | 261.3 | 333.8 | 1.2 |
| E5 | 252.0 | 335.6 | 1.4 |
| E6 | 248.6 | 331.3 | 1.2 |
| E7 | 240.7 | 330.9 | 1.4 |
| CE1 | 161.3 | 276.5 | 2.6 |
| CE2 | 158.3 | 305.1 | 3.1 |
| CE3 | 232.3 | 328.9 | 1.5 |
| CE4 | 236.7 | 326.7 | 1.6 |
| CE5 | 238.5 | 320.0 | 2.1 |
| CE6 | 175 | 298 | 2.7 |
| CE7 | 208.4 | 341.5 | 8.6 |
| CE8 | 227.7 | 320.5 | 2.0 |

It can be seen from Table 2 that the yield strength and the ultimate tensile strength of the aluminum alloy castings of the present invention are significantly improved compared with that of existing aluminum alloy castings. Using the die-cast aluminum alloy of the present invention to manufacture the motor structure member of the new energy electric automobile allows a thin-walled design, and thus may effectively achieve light weighting of the structure.

Some embodiments of the present invention have been described in detail above with reference to the accompanying drawings. However, the present invention is not limited to the specific details of the above embodiments. Within the scope of the technical concept of the present invention, various simple modifications may be made to the technical solutions of the present invention. These simple variants all belong to the protection scope of the present invention.

In addition, it should be noted that the specific technical features described in the above specific embodiments may be combined in any suitable manner without conflict. In order to avoid unnecessary repetition, various possible combinations are not separately described in the present invention.

In addition, various embodiments of the present invention can also be combined, as long as they do not violate the idea of the present invention, and they should also be regarded as the contents disclosed in the present invention.

## Claims

1. A heat-treatment-free die-cast aluminum alloy, comprising:
10.0 to 12.0 wt% of Si,
0.9 to 1.5 wt% of Mg,
2.5 to 3.5 wt% of Cu,
0.4 to 0.8 wt% of Mn,
0.9 to 1.5 wt% of Zn,
0.1 to 0.2 wt% of Ti,
0.03 to 0.06 wt% of Sr,
0.18 wt% or less of Fe,
0.15 wt% or less of a rare earth element,
0.1 wt% or less of an impurity element, and
a balance of Al,
based on a total weight of the die-cast aluminum alloy,
wherein the rare earth element comprises at least one of Sm or Y

2. The die-cast aluminum alloy according to claim 1, comprising:
10.0 to 12.0 wt% of Si,
1.0 to 1.4 wt% of Mg,
3.0 to 3.3 wt% of Cu,
0.03 to 0.06 wt% of Y,
0.03 to 0.06 wt% of Sm,
0.4 to 0.55 wt% of Mn,
0.9 to 1.5 wt% of Zn,
0.1 to 0.2 wt% of Ti,
0.03 to 0.06 wt% of Sr,
0.12 to 0.16 wt% of Fe,
0.05 wt% or less of the impurity element, and
a balance of Al,
based on the total weight of the die-cast aluminum alloy.

3. The die-cast aluminum alloy according to claim 1 or 2, wherein a weight ratio of Sm to Y is in a range of 0.8 to 1.2, and a weight ratio of Mg to Cu is in a range of 0.32 to 0.45.

4. The die-cast aluminum alloy according to any one of claims 1 to 3, having a yield strength of 240 to 280 MPa, an ultimate tensile strength of 330 to 380 MPa, and an elongation of 1 to 4%.

5. The die-cast aluminum alloy according to claim 4, having an elongation of 1.1 to 2.5%.

6. A method for preparing the heat-treatment-free die-cast aluminum alloy according to any one of claims 1 to 5, comprising:
melting an aluminum ingot in a smelting furnace, and adding an industrial silicon, a Zn material, a Cu material and a Mn material for a first smelting to obtain a first melt;
subjecting the first melt to a refining treatment and a slagging-off treatment to obtain a second melt;
adding a Ti material, a Sr material, a rare earth material comprising at least one of a Sm material or an Y material, and a Mg material to the second melt for a second smelting to obtain a third melt;
degassing the third melt to obtain a fourth melt; and
high-pressure die casting the fourth melt to obtain the heat-treatment-free die-cast aluminum alloy.

7. The method according to claim 6, wherein the Zn material is an Al-Zn alloy; the Cu material is an Al-Cu alloy; the Mn material is an Al-Mn alloy; the Ti material is an Al-Ti alloy; the Sr material is an Al-Sr alloy; the Sm material is an Al-Sm alloy; the Mg material is a magnesium ingot and/or a Mg-Y alloy, and the Y material is a Mg-Y alloy and/or a Al-Y alloy.

8. The method according to claim 7, wherein the Al-Zn alloy is an Al-10Zn intermediate alloy;
the Al-Cu alloy is an Al-50Cu intermediate alloy; the Al-Mn alloy is an Al-20Mn intermediate alloy;
the Al-Ti alloy is an Al-5Ti intermediate alloy; the Al-Sr alloy is an Al-5Sr intermediate alloy; the Al-Sm alloy is an Al-20Sm intermediate alloy; and the Mg-Y alloy is a Mg-30Y intermediate alloy.

9. The method according to any one of claims 6 to 8, wherein the first smelting is performed at a temperature of 770 to 790 °C; and
the second smelting is performed at a temperature of 750 to 760 °C.

10. The method according to any one of claims 6 to 9, wherein the refining treatment comprises:
introducing an inert gas atmosphere or nitrogen with refining agent powders into the first melt to perform a first refining at a temperature of 750 to 760 °C for 50 to 60 min; and
reintroducing the inert gas atmosphere or nitrogen with the refining agent powders into the first melt to perform a second refining at a temperature of 750 to 760 °C;
wherein the inert gas is argon; and
the degassing is performed at a temperature of 750 to 760 °C for 10 to 15 min.

11. The method according to any one of claims 6 to 10, wherein conditions for the high-pressure die casting comprise: a die-casting temperature of 690 to 700 °C, a pressure of 35 to 40 MPa, a high-speed position of 220 to 230 mm, a press-shoot time of 6 to 8 s, and a cooling time of 8 to 10 s,
wherein a casting die for the high-pressure die casting has a thickness of 3 to 7 mm.

12. An automobile body structural member, comprising the heat-treatment-free die-cast aluminum alloy according to any one of claims 1 to 5 or the heat-treatment-free die-cast aluminum alloy prepared by the method according to any one of claims 6 to 11.
